# EUROPÄISCHE PATENTSCHRIFT

(11) **EP 2 588 515 B1**
(45) Veröffentlichungstag und Bekanntmachung des Hinweises auf die Patenterteilung: **16.07.2014**
(21) Anmeldenummer: 11721757.0
(22) Anmeldetag: 18.05.2011
(51) Int. Cl.: C08J 5/04, C08K 5/353, F16L 11/08, C08K 7/02, D04B 21/00, D04H 13/00, D03D 19/00, F02B 33/44, D04C 1/02, D03D 1/00

(54) **ARTIKEL, INSBESONDERE SCHLAUCH, INSBESONDERE WIEDERUM LADELUFTSCHLAUCH, MIT EINEM EINGEBETTETEN FESTIGKEITSTRÄGER AUF DER BASIS EINES POLYOXADIAZOLS**
ARTICLE, MORE PARTICULARLY HOSE, MORE PARTICULARLY AGAIN CHARGE-AIR HOSE, WITH AN EMBEDDED REINFORCEMENT BASED ON A POLYOXADIAZOLE
ARTICLE, EN PARTICULIER TUYAU FLEXIBLE, NOTAMMENT TUYAU FLEXIBLE D'AIR DE SURALIMENTATION, COMPORTANT UN MATERIAU DE RENFORT INCORPORE A BASE D'UN POLYOXADIAZOLE

(30) Priorität: 01.07.2010 DE 102010017679
(43) Veröffentlichungstag der Anmeldung: 08.05.2013
(73) Patentinhaber: ContiTech Schlauch GmbH, 30165 Hannover (DE)
(72) Erfinder: BRETTSCHNEIDER, Ulrich, 37520 Osterode (DE); SCHUBERT, Horst, 31556 Wölpinghausen (DE)
(74) Vertreter: Preusser, Andrea
(86) Internationale Anmeldenummer: PCT/EP2011/058019
(87) Internationale Veröffentlichungsnummer: WO 2012/000713

(56) Entgegenhaltungen:
- WO-A1-2009/158366
- DE-A1-102004 051 073
- DE-B- 1 220 120
- US-A- 4 585 035

## Beschreibung

Die Erfindung betrifft einen Artikel aus einem polymeren Werkstoff, der mit einem eingebetteten Festigkeitsträger versehen ist, der ganz oder teilweise aus einem textilen Werkstoff besteht.

Derartige Artikel auf der Basis von Verbundwerkstoffen sind beispielsweise schlauchförmige Körper, insbesondere Schläuche und Luftfederbälge, Antriebsriemen, Fördergurte und flexible Behälter. Aus dieser Artikelgruppe sind insbesondere Schläuche zu nennen, die aus einer Innenschicht und Außenschicht und einem eingebetteten ein- oder mehrlagigen Festigkeitsträger sowie gegebenenfalls aus weiteren Schichten bestehen, beispielsweise aus einer Diffusionssperrschicht. Diesbezüglich wird insbesondere auf folgende Patentliteratur verwiesen: DE 42 32 946 C2, DE 10 2004 051 073 A1, DE 10 2008 014 988 A1, EP 0 567 115 B1, EP 0 848 794 B1, EP 0 895 015 B1, EP 1 396 670 B1, EP 1 941 150 B1 und US 2009/0236004 A1.

In der praktischen Anwendung kommen bei den gattungsgemäßen Artikeln diverse Festigkeitsträger zum Einsatz, die den jeweiligen Anforderungen bezüglich Druck und/oder Temperatur und/oder Dynamik und/oder Medium über die erforderliche Nutzungszeit sicher standhalten. Im Hinblick auf textile Festigkeitsträgerwerkstoffe sind beispielsweise Polyamide, Aramide und Polyester zu erwähnen. Die Einbindung der Festigkeitsträger in die Polymermatrix, beispielsweise in eine noch unvulkanisierte Kautschukmischung zur Herstellung von Artikeln auf der Basis von Elastomeren oder thermoplastischen Elastomeren oder in einen aufgeschmolzenen Kunststoff zur Herstellung von thermoplastischen Artikeln, geschieht in unterschiedlichsten Ausführungsformen, beispielsweise in Form von Fasern, Garnen, Corden und Filamenten oder auch in Form von Flächengebilden, die wiederum beispielsweise Gewirke, Vliese, Gewebe, Gestricke und Geflechte sein können. Die endgültige Einbindung der Festigkeitsträger erfolgt letztlich über die Vulkanisation oder eine sonstige Aushärtung.

Insbesondere die Schläuche sind einer breiten Anwendungspalette von unterschiedlichen Anforderungen ausgesetzt, wobei die Entscheidung für den Einsatz des jeweiligen Festigkeitsträgers stets nach Einschätzung von Eignung und Kosten vorgenommen wird.

Besonders hohe Anforderungen werden an solche Schläuche und damit an deren Festigkeitsträger gestellt, die im Zuluftleitungsbereich von aufgeladenen Verbrennungsmotoren zum Einsatz kommen (EP 1 396 670 B1). Auf den diesbezüglichen Stand der Technik wird im Folgenden näher eingegangen.

Aufgeladene Motoren erfahren eine immer breitere Anwendung im Markt, weil mit dieser Technik sowohl die Literleistung als auch die Abgasqualität gemäß EU-Norm signifikant verbessert werden können. Das technische Prinzip lässt sich in einfachster Form dahingehend beschreiben, dass die zur Verbrennung benötigte Luft über einen Vorverdichter komprimiert wird, um den absoluten Gehalt an Sauerstoff, der in atmosphärischer Luft nur etwa 21 % beträgt, zu erhöhen. Dann wird die verdichtete Luft über einen Ladeluftkühler gekühlt und anschließend in den Verbrennungsraum gedrückt. Da der Ladeluftkühler vom Motor abgelöst an der Karosserie montiert ist, müssen die den Ladeluftkühler in das System einbindenden Ladeluftschläuche hohen Druck- und Temperaturbelastungen standhalten. Zusätzlich unterliegen sie im Fahrzustand wegen der intensiven Bewegungsunterschiede zwischen Motor und Karosserie auch einer permanenten dynamischen Belastung durch vielfältige räumliche Auslenkung in alle möglichen Richtungen. Im Ladeluftsystem selbst wird nicht nur Luft verdichtet und gefördert, sondern im Leitungsinnern fallen auch Kraftstoffreste und Schmierstoffbeimengungen an, gegen die der Polymerwerkstoff ein Autoleben lang beständig sein muss.

Grundsätzlich können die einzusetzenden Werkstoffe abhängig von den Einsatzbedingungen variiert werden, aber speziell für Festigkeitsträger gibt es für hohe Temperaturen in Verbindung mit hohem Druck bislang nur eine beschränkte Auswahlmöglichkeit. In der Regel werden für solche Einsatzfälle Garne/Zwirne auf der Basis von meta-Aramid zur Anwendung gebracht.

Der Erfindung liegt nun die Aufgabe zu Grunde, einen gattungsgemäßen Artikel, insbesondere einen Schlauch, insbesondere wiederum einen Ladeluftschlauch, bereit zu stellen, der hohen dynamischen Belastungen bei hohen Temperaturen und Drücken standhält und zudem eine hohe Lebensdauer aufweist.

Gelöst wird diese Aufgabe dadurch, dass
- nach einer ersten Festigkeitsträgervariante der textile Werkstoff ausschließlich aus Polyoxadiazol (POD) und/oder einem POD-Derivat und/oder einem POD-Co-Polymeren besteht oder
- nach einer zweiten Festigkeitsträgervariante der textile Werkstoff eine textile Werkstoffkombination ist, bestehend aus POD und/oder einem POD-Derivat und/oder einem POD-Co-Polymeren sowie aus wenigstens einem weiteren textilen Werkstoff, der nicht der vorgenannten POD-Gruppe entstammt, oder
- nach einer dritten Festigkeitsträgervariante der textile Werkstoff eine Werkstoffkombination umfasst, bestehend aus POD und/oder einem POD-Derivat und/oder einem POD-Co-Polymeren sowie aus wenigstens einem weiteren Werkstoff, der nicht einer Textilgruppe entstammt.

Im Folgenden werden diese drei POD-basierten Festigkeitsträgervarianten unter Einbezug vorteilhafter Gestaltungsmöglichkeiten näher vorgestellt.

### - Erste Festigkeitsträgervariante

Im Rahmen dieser Festigkeitsträgervariante kommt nur POD oder nur ein POD-Derivat, beispielsweise ein sulfoniertes POD, oder nur ein POD-Co-Polymer oder eine Kombination innerhalb der vorgenannten POD-Gruppe zum Einsatz. Von besonderer Bedeutung ist hier die ausschließliche Verwendung von POD.

Hinsichtlich Details des Werkstoffes POD, insbesondere unter dem Aspekt der Chemie, wird insbesondere auf folgende Patentliteratur verwiesen: US 7 528 217 B2, RU 2213814 C2 und RU 2213815 C2.

### - Zweite Festigkeitsträgervariante

Nach dieser Festigkeitsträgervariante ist der textile Werkstoff eine Werkstoffkombination (Hybrid), bestehend aus POD und/oder einem POD-Derivat und/oder einem POD-Co-Polymeren sowie aus wenigstens einem weiteren textilen Werkstoff, der nicht der vorgenannten POD-Gruppe entstammt. Von besonderer Bedeutung ist dabei die Hybridbildung von POD mit wenigstens einem anderen textilen Werkstoff.

Der weitere textile Werkstoff, der nicht der POD-Gruppe entstammt, kann ein synthetisches oder natürliches Polymer sein. Zum Einsatz kommen insbesondere folgende Werkstofftypen:
Polyamid (PA), z.B. PA6, PA6.6, PA11, PA12, PA6.10, PA6.12, Copolyamide
Polyester (PES)
Aramid, z.B. meta-Aramid (m-Aramid), para-Aramid (p-Aramid)
Reyon
Polyethylentherephthalat (PET)
Baumwolle
Zellwolle
Polyvinylalkohol (PVAL)
Polyvinylacetal (PVA)
Polyetheretherketon(PEEK)
Polyethylen-2,6-naphthalat (PEN)
Polyphenylen
Polyphenylenoxid (PPO)
Polyphenylensulfid (PPS)
Polphenylenether

Auch Kombinationen der vorgenannten Werkstofftypen sind möglich. Beispiele für derartige Hybrid-Konzeptionen können sein:
POD/PA
POD/m-Aramid
POD/PPS
POD/PA/PPS

Der Mengenanteil an POD und/oder dem POD-Derivat und/oder dem POD-Co-Polymeren innerhalb eines textilen Hybrid-Systems beträgt 50 bis 90 Gew.-%, insbesondere 55 bis 80 Gew.-%.

### - Dritte Festigkeitsträgervariante

Nach dieser Festigkeitsträgervariante umfasst der textile Werkstoff eine Werkstoffkombination (Hybrid), bestehend aus einem POD und/oder einem POD-Derivat und/oder einem POD-Co-Polymeren sowie aus wenigstens einem weiteren Werkstoff, der nicht einer Textilgruppe entstammt.

Der weitere Werkstoff, der keiner Textilgruppe entstammt, kann insbesondere sein:
Metallfasern
Carbonfasem
Glasfasern
Basaltfasern

Auch Kombinationen der vorgenannten Werkstofftypen sind möglich. Ein Beispiel für eine derartige Hybrid-Konzeption kann sein:
POD-Fasern/Carbon-Fasern

Hinsichtlich des Mengenanteils an POD und/oder dem POD-Derivat und/oder dem POD-Co-Polymeren innerhalb eines derartigen Hybrid-Systems wird auf die zweite Festigkeitsträgervariante verwiesen.

Hinsichtlich des Festigkeitsträgerwerkstoffes nach der ersten und/oder zweiten und/oder dritten Festigkeitsträgervariante gelten ferner folgende vorteilhafte Gestaltungsmöglichkeiten:
- Der Festigkeitsträgerwerkstoff kann haftfreundlich präpariert sein, beispielsweise mittels eines Beschichtungsprozesses mit Resorcin-Formaldehyd-Latex (RFL).
- Der Festigkeitsträgerwerkstoff liegt in einer Fadenform vor. Hinsichtlich der Fadenform sind insbesondere folgende Varianten zu nennen:

| | |
|---|---|
| Monofil | |
| Filamentgarn | aus einem Polymer gesponnen |
| Stretchbrokengarn | aus Filamentgarnen hergestellt, |
| | belastet wird bis zum Bruch, |
| | Filamente reißen mit unterschiedlichen Längen |
| Cordfaden | |
| Zwirnfaden | |
| Stapelfasern | aus Filamentgarnen hergestellt, |
| | längendefiniert gleichmäßig geschnitten, |
| | anschließend mechanisch versponnen (z.B. 30 bis 150 mm) |
| Kurzschnittfasern | hergestellt aus Filamentgarnen oder Strechbrokengarnen in Längen (z.B. 1 bis 15 mm) |
| Pulpe | meistens in Form von Faserbündeln bzw. Faserkabeln (dicke Filamentgarne) |

Bei Vorliegen eines Garns oder Zwirns beträgt die Feinheit (Drehung) insbesondere 1000 bis 12000 dtex.
- Der Festigkeitsträgerwerkstoff liegt als ein Flächengebilde vor, wobei insbesondere folgende Varianten zu nennen sind:
   Gewebe
   Cordgewebe
   Band
   Gestrick
   Gewirke
   Gelege
   Geflechte
   Vlies
   Filz
   parallelisierte Fäden

Der polymere Werkstoff des Artikels besitzt insbesondere elastische Eigenschaften, wobei diesbezüglich insbesondere die folgenden beiden Polymervarianten zum Einsatz gelangen:

### - Polymervariante A

Der polymere Werkstoff ist ein elastomerer Werkstoff auf der Basis einer vulkanisierten Kautschukmischung, die eine unverschnittene Kautschukkomponente oder einen Kautschukkomponentenverschnitt und übliche Mischungsingredienzien enthält. Als Kautschukkomponenten sind insbesondere zu nennen:
Ethylen-Propylen-Mischpolymerisat (EPM)
Ethylen-Propylen-Dien-Mischpolymerisat (EPDM)
Nitrilkautschuk (NBR)
(teil)hydrierter Nitrilkautschuk (HNBR)
Fluor-Kautschuk (FKM)
Chloropren-Kautschuk (CR)
Naturkautschuk (NR)
Styrol-Butadien-Kautschuk (SBR)
Isopren-Kautschuk (IR)
Butylkautschuk (IIR)
Brombutylkautschuk (BIIR)
Chlorbutylkautschuk (CIIR)
Butadien-Kautschuk (BR)
Chloriertes Polyethylen (CM)
Chlorsulfoniertes Polyethylen (CSM)
Polyepichlorhydrin (ECO)
Ethylen-Vinylacetat-Kautschuk (EVA)
Acrylat-Kautschuk (ACM)
Ethylen-Acrylat-Kautschuk (AEM)
Silikonkautschuk (MQ, VMQ, PVMQ, FVMQ; DE 10 2006 058 470 A1)
Fluorierter Methylsilikonkautschuk (MFQ)
Perfluorinierter Propylen-Kautschuk (FFPM)
Perfluorcarbon-Kautschuk (FFKM)
Poyurethan (PU)

Auch der Einsatz eines Verschnittes, insbesondere in Verbindung mit einem der vorgenannten Kautschuktypen, beispielsweise ein NR/BR-Verschnitt, ist möglich. Von besonderer Bedeutung sind: EPM, EPDM, CR, NR, NBR, HNBR, CM, CSM, FKM, ACM, AEM oder Silikonkautschuk

Die üblichen Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoff (z.B. Farbpigmente). Diesbezüglich wird auf den allgemeinen Stand der Kautschukmischungstechnologie verwiesen.

### Polymervarianten B

Der polymere Werkstoff ist ein thermoplastisches Vulkanisat (thermoplastisches Elastomer, Kurzbezeichnung TPE), enthaltend wenigstens eine Thermoplastkomponente, wenigstens eine Kautschukkomponente, die zumindest teilvemetzt ist, sowie übliche Mischungsingredienzien.

Die bevorzugten Thermoplastkomponenten sind:
Polyolefin, insbesondere Polyethylen (PE) oder Polypropylen (PP)
Polystyrol
Polyamid (PA), beispielsweise PA6 oder PA6.6
Polyester (PES)

Als Kautschukkomponenten sind insbesondere EPM, EPDM, SBR, CR, NR, NBR, FKM, ACM oder AEM zu nennen, die insbesondere mit keiner weiteren Kautschukkomponente verschnitten sind.

Hinsichtlich der üblichen Mischungsingredienzien wird auf die Mischungstechnologie zu der Polymervariante A, insbesondere auf die Lehre gemäß der Offenlegungsschrift DE 100 04 632 A1 verwiesen.

Die beiden Polymervarianten A und B sind insbesondere bei Schläuchen von Bedeutung.

Das neue Festigkeitsträgerkonzept gemäß den drei näher vorgestellten Festigkeitsträgervarianten kommt insbesondere bei folgenden Artikeln zur Anwendung:

### - Schläuche

Bei Schläuchen ist der Festigkeitsträger zumeist vollständig in einem polymeren Werkstoff, insbesondere nach der Polymervariante A oder B, eingebettet, und zwar unter Ausbildung einer Innen- und Außenschicht sowie gegebenenfalls einer oder mehreren Zwischenschicht/en. Der Festigkeitsträger liegt insbesondere in einer Fadenform vor, beispielsweise als Cordfäden oder Zwirnfäden. Diese Fäden verlaufen in Schlauchlängsrichtung zumeist in einem bestimmten Winkel, beispielsweise 54 Grad, und zwar unter Ausbildung einer Kreuzlagenanordnung. Auch die Gestrickkonstruktion, die im Rahmen der Ladeluftschläuche noch näher vorgestellt wird, ist von Bedeutung.

Bei manchen Schläuchen, beispielsweise bei Chemikalienschläuchen, kann neben dem Festigkeitsträger nach einer der drei Festigkeitsträgervarianten noch ein spiralförmiger Festigkeitsträger aus Stahl, der zumeist im Bereich einer zusätzlichen Zwischenschicht verläuft, eingesetzt werden (DE 10 2008 014 988 A1, US 2009/0236004 A1).

Auch ein zusätzlicher Inliner in Form einer Folie, beispielsweise einer PA-Folie oder PTFE-Folie, kann verwendet werden (DE 10 2008 014 988 A1).

Was Schläuche betrifft, so gibt es ein breites Anwendungsspektrum. Zu nennen sind hier beispielsweise der Wasserschlauch, Hochdruckzulaufschlauch, Pressluftschlauch, Kompressorschlauch, Autogenschlauch, Allbrenngasschlauch, Stickstoffschlauch, Propangasschlauch, Kältemittelschlauch, Feuerlöschschlauch, Kraftstoffschlauch, Chemieschlauch, Pharmaschlauch, Lebensmittelschlauch, Dampfschlauch, Beton- und Mörtelförderschlauch, Baggerschlauch, Schwimmschlauch und der Fahrzeugschlauch.

Bei einem Fahrzeugschlauch ist insbesondere der Ladeluftschlauch zu erwähnen.

### - Luftfederbälge und Kompensatoren

Bei Luftfederbälgen und Kompensatoren kommt neben der Kreuzlagenkonzeption, wie sie bei Schläuchen anzutreffen ist, auch die axial verlaufende Anordnung von Verstärkungsfäden zur Anwendung, nämlich bei Axialbälgen in der Pkw-Schwingungstechnik wie auch bei Torsionskompensatoren. Der Festigkeitsträger ist zumeist vollständig in einem polymeren Werkstoff, insbesondere nach der Polymervariante A, eingebettet, und zwar ebenfalls unter Ausbildung einer Innen- und Außenschicht sowie gegebenenfalls einer oder mehreren Zwischenschicht/en.

### - Antriebsriemen

Bei Antriebsriemen, wobei Flachriemen, Keilriemen, Keilrippenriemen und Zahnriemen zu nennen sind, werden in Laufrichtung fadenförmige Zugträger, insbesondere in Form von Cordfäden, eingesetzt, die vollständig in einem polymeren Werkstoff, insbesondere nach der Polymervariante A, eingebettet sind, und zwar unter Ausbildung eines Riemenrückens als Decklage und eines Unterbaus mit einer Kraftübertragungszone. Dabei wird zumeist die Kraftübertragungszone mit einer zusätzlichen Textilauflage (Gewebe, Gewirke, Gestrick) als Abriebschutz versehen. Diese Textilauflage ist oberflächenhaft eingebettet. Die Textilauflage kann zwecks Ölbeständigkeit noch mit einer Oberflächenbeschichtung aus einem polymeren Material (z.B. PTFE) versehen sein.

Bei Antriebsriemen kann der Festigkeitsträger nach einer der drei Festigkeitsträgervarianten nicht nur für den Zugträger, sondern auch für die Textilauflage eingesetzt werden. Allerdings bieten die bisherigen umfangreichen sowie erfolgreichen Entwicklungsarbeiten auf dem Gebiet der Antriebsriemen keine Notwendigkeit, bei den Textilauflagen auf das neue Werkstoffkonzept zurückzugreifen.

### - Fördergurte

Bei Textilfördergurten bilden Kettfäden und Schussfäden ein Gewebe, das vollständig in einem polymeren Werkstoff, insbesondere nach der Polymervarinate A, eingebettet ist, und zwar unter Ausbildung einer tragseitigen und laufseitigen Deckplatte.

### - Mehrschichtige Stoffbahnen

Bei mehrschichtigen Stoffbahnen, beispielsweise für Trinkwasserbehälter, Schutzanzüge und Fahrzeugübergangsbälgen, bilden Kettfäden und Schussfäden ein Gewebe. Das Gewebe kann dabei vollständig in einem polymeren Werkstoff, insbesondere nach der Polymervariante A oder B, eingebettet sein. Auch eine oberflächenhafte, einseitige Einbettung kommt in manchen Anwendungsfällen, beispielsweise bei Schutzanzügen, zur Anwendung.

Das neue Festigkeitsträgerkonzept nach der ersten, zweiten oder dritten Festigkeitsträgervariante kommt insbesondere bei Schläuchen, insbesondere wiederum bei Ladeluftschläuchen, zum Einsatz.

Vergleichsversuche anhand eines Ladeluftschlauches sollen nun die Bedeutung des neuen Festigkeitsträgerkonzeptes verdeutlichen, und zwar unter näherer Untersuchung der ersten Festigkeitsträgervariante. Die diesbezüglichen Versuchsergebnisse sind in den beiden folgenden Tabellen 1 und 2 festgehalten, und zwar betreffend:
- den Vergleich eines Festigkeitsträgers aus POD-Garnen und m-Aramid-Garnen unter den Prüfkriterien Dehnung, Schlingenfestigkeit, Reißdehnung und maximaler Arbeitstemperatur (Tabelle 1) sowie
- den Vergleich der Restfestigkeit in % eines Festigkeitsträgers aus POD-Garnen und m-Aramid-Garnen nach Lagerung in Umluft mit 24 h Klimatisierung (Tabelle 2).

Der zwischen der Innenschicht und Außenschicht eingebettete Festigkeitsträger lag dabei jeweils als Gestrick vor.

**Tabelle 1**

| **Prüfkriterien** | **Einheit** | **POD** | **m-Aramid** |
|---|---|---|---|
| Dehnung bei 45 N Zugbelastung | % | 1 | 1,1 |
| Schlingenfestigkeit | % | 88 | 75 |
| Reißdehnung | % | 8,9 | 28,5 |
| Maximale Arbeitstemperatur | °C | 260 | 250 |

Im Vergleich zu m-Aramid-Garnen zeichnen sich POD-Garne unter gleichen Bedingungen durch eine etwas geringere Dehnung, eine deutlich höhere Schlingenfestigkeit, durch eine besonders deutlich niedrigere Reißdehnung (Bruchdehnung) sowie durch eine signifikant höhere Temperaturbeständigkeit aus.

**Tabelle 2**

| **Material** | **Einwirkzeit** | **200°C** | **250°C** |
|---|---|---|---|
| **POD** | nach 100 h | 99 | 105 |
| | nach 500 h | 100 | 100 |
| | nach 1.000 h | 103 | 94 |
| | | | |
| **m-Aramid** | nach 100 h | 101 | 99 |
| | nach 500 h | 100 | 91 |
| | nach 1.000 h | 94 | 84 |

Selbst bei 250°C weisen POD-Garne eine höhere Restfestigkeit als m-Aramid-Garne auf.

Weitere Versuche hatten ferner Folgendes ergeben:
- Auch POD-Garne zeigen im Anfangsdehnungsbereich einen für die Funktionsbeanspruchung niedrigen Elastizitäts-Modul, der dafür sorgt, dass in dem anisotropen Composit aus Polymerlagen, insbesondere Elastomerlagen, und Gestrickeinlage eine Angleichung der Dehnung aller Verbundwerkstoffe erfolgt und somit das sonst übliche Auftreten von inneren Überspannungen und daraus entstehenden Rissen verhindert wird.
- POD-Garne fallen im Vergleich zu m-Aramid-Garnen bei gleicher Festigkeit deutlich schlanker aus und lassen sich im hohen dtex-Bereich im Gegensatz zu m-Aramid-Gamen ohne Probleme störungsfrei verstricken.
- POD-Garne zeigen eine signifikant bessere Haftung an die Polymermatrix und erreichen beispielsweise an Silikonkautschuk etwa 8 % höhere Trennlasten als m-Aramid-Garne unter gleichen Bedingungen.
- POD-Garne haben aufgrund eines relativ einfachen Herstellungsverfahrens zudem eine deutlich niedrigere Kostensituation als m-Aramid-Garne.

Zusammenfassend können im Hinblick auf die Verwendung von POD-Garnen in Schläuchen, insbesondere in Ladeluftschläuchen, folgende wesentlichen Vorteile festgehalten werden:
- Sie zeigen sehr gute eignungsbezogene Materialeigenschaften.
- Sie zeichnen sich durch hervorragende Verarbeitungseigenschaften aus.
- Sie weisen deutliche Kostenvorteile gegenüber m-Aramid-Gamen auf.
- Die Schläuche, insbesondere Ladeluftschläuche, zeigen unter Einbeziehung der vorgenannten Vorteile in Prüfläufen eine um etwa 30 % höhere Lebensdauer.

Die Erfindung wird nun anhand von Ausführungsbeispielen unter Bezugnahme auf schematische Zeichnungen erläutert. Es zeigen:
- Fig. 1: einen Schlauch mit einem eingebetteten textilen Festigkeitsträger;
- Fig. 2: einen Zwirnfaden.

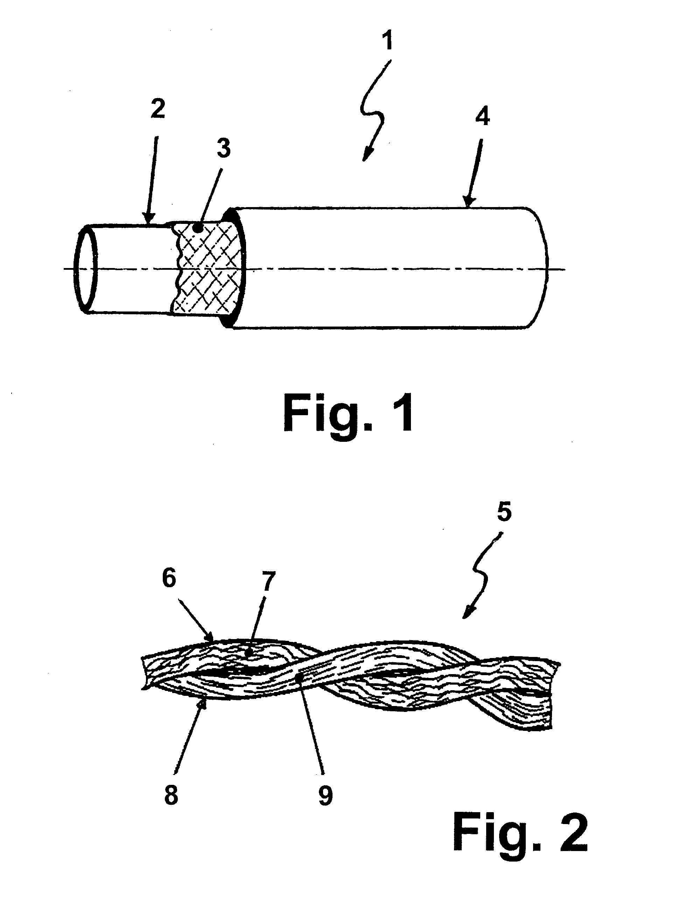

Nach Fig. 1 besteht der Schlauch 1 aus einer Innenschicht 2 und Außenschicht 4 aus jeweils einem polymeren Werkstoff mit elastischen Eigenschaften, beispielsweise nach der Polymervariante A. Zwischen der Innenschicht und Außenschicht ist ein textiler Festigkeitsträger 3 eingebettet.

Bei Ladeluftschläuchen liegt der textile Festigkeitsträger aus POD als Gestrickeinlage eingebettet zwischen der Innenschicht 2 und Außenschicht 4 aus einer vulkanisierten Kautschukmischung vor, die je nach Temperatur und sonstigen Anforderungen auf CR, HNBR, FKM, AEM, ACM oder Silikonkautschuk basiert. Zusätzlich zu der Gestricklage und den anliegenden Elastomerlagen kann je nach Bedarf der Schlauch mit weiteren Innen- und Außenschichten unterschiedlichster Polymerwerkstoffe ausgerüstet sein.

Die Herstellung eines Ladeluftschlauchs geschieht nach dem üblichen Verfahren, nach dem in einer Extrusionslinie in Kombination mit einer Strickmaschine die einzelnen Lagen nacheinander extrudiert und die Strickeinlage auf Zielposition zwischen die noch unvulkanisierten Kautschuklagen eingefügt wird.

Anschließend wird die Vulkanisation unter den erforderlichen Konditionen von Temperatur und Zeit durchgeführt. Zur besseren Anbindung der einzelnen Schichten zueinander können die verwendeten Werkstoffe im Prozess mit Haftvermittlern behandelt werden.

Fig 2 zeigt einen Zwirnfaden 5, gebildet aus einem ersten Faden 6 aus einem ersten textilen Werkstoff 7 und einem zweiten Faden 8 aus einem zweiten textilen Werkstoff 9. Bei dieser Zwirnkonstruktion werden im Folgenden zwei Ausführungsbeispiele herangezogen.
- Der erste textile Werkstoff 7 und der zweite textile Werkstoff 9 bestehen jeweils aus POD. Der Zwirnfaden 5 besteht somit ausschließlich aus POD.
- Der erste textile Werkstoff 7 besteht aus POD und der zweite textile Werkstoff 9 aus PA, beispielsweise aus PA6.6. Der Zwirnfaden 5 liegt hier somit als Hybridzwirn vor, gebildet aus dem ersten Faden 6 aus POD und dem zweiten Faden 8 aus PA.

### Bezugszeichenliste

### (Teil der Beschreibung)

- 1: Schlauch
- 2: Innenschicht (Seele)
- 3: Festigkeitsträger
- 4: Außenschicht (Mantel, Decke)
- 5: Zwirnfaden
- 6: erster Faden
- 7: erster textiler Werkstoff
- 8: zweiter Faden
- 9: zweiter textiler Werkstoff

## Patentansprüche

1. Artikel aus einem polymeren Werkstoff, der mit einem eingebetteten Festigkeitsträger versehen ist, der ganz oder teilweise aus einem textilen Werkstoff besteht, **dadurch gekennzeichnet, dass**
- nach einer ersten Festigkeitsträgervariante der textile Werkstoff ausschließlich aus Polyoxadiazol (POD) und/oder einem POD-Derivat und/oder einem POD-Co-Polymeren besteht oder
- nach einer zweiten Festigkeitsträgervariante der textile Werkstoff eine textile Werkstoffkombination ist, bestehend aus POD und/oder einem POD-Derivat und/oder einem POD-Co-Polymeren sowie aus wenigstens einem weiteren textilen Werkstoff, der nicht der vorgenannten POD-Gruppe entstammt, oder
- nach einer dritten Festigkeitsträgervariante der textile Werkstoff eine Werkstoffkombination umfasst, bestehend aus POD und/oder einem POD-Derivat und/oder einem POD-Co-Polymeren sowie aus wenigstens einem weiteren Werkstoff, der nicht einer Textilgruppe entstammt.

2. Artikel nach Anspruch 1, **dadurch gekennzeichnet, dass** nach der ersten Festigkeitsträgervariante der textile Werkstoff ausschließlich aus POD besteht.

3. Artikel nach Anspruch 1, **dadurch gekennzeichnet, dass** nach der zweiten Festigkeitsträgervariante der textile Werkstoff eine textile Werkstoffltombination ist, bestehend aus POD sowie aus wenigstens einem weiteren textilen Werkstoff, der nicht der POD-Gruppe entstammt.

4. Artikel nach Anspruch 1, **dadurch gekennzeichnet, dass** nach der dritten Festigkeitsträgervariante der textile Werkstoff eine Werkstoftkombination umfasst, bestehend aus POD sowie aus wenigstens einem weiteren Werkstoff, der nicht einer Textilgruppe entstammt.

5. Artikel nach Anspruch 1 oder 3, **dadurch gekennzeichnet, dass** nach der zweiten Festigkeitsträgervariante der weitere textile Werkstoff, der nicht der POD-Gruppe entstammt, aus Polyamid (PA), Polyester (PES), Aramid, Reyon, Polyethylentherephtalat (PET), Baumwolle, Zellwolle, Polyvinylalkohol (PVAL), Polyvinylacetal (PVA), Polyetheretherketon (PEEK), Polyethylen-2,6-naphthalat (PEN), Polyphenylen, Polyphenylenoxid (PPO), Polyphenylensulfid (PPS) oder Polyphenylenether oder aus einer Kombination der vorgenannten Werkstofftypen besteht.

6. Artikel nach Anspruch 1 oder 4, **dadurch gekennzeichnet, dass** nach der dritten Festigkeitsträgervariante der weitere Werkstoff, der nicht der Textilgruppe entstammt, aus Metallfasern, Carbonfasern, Glasfasern oder Basaltfasern oder aus einer Kombination der vorgenannten Werkstofftypen besteht.

7. Artikel nach einem der Ansprüche 1 sowie 3 bis 6, **dadurch gekennzeichnet, dass** nach der zweiten und/oder dritten Festigkeitsträgervariante der Mengenanteil an POD und/oder dem POD-Derivat und/oder dem POD-Co-Polymeren 50 bis 90 Gew.-% beträgt.

8. Artikel nach einem der Ansprüche 1 bis 7, **dadurch gekennzeichnet, dass** der Festigkeitsträgerwerkstoff nach der ersten und/oder zweiten und/oder dritten Festigkeitsträgervariante haftfreundlich präpariert ist.

9. Artikel nach einem der Ansprüche 1 bis 8, **dadurch gekennzeichnet, dass** der Festigkeitsträgerwerkstoff nach der ersten und/oder zweiten und/oder dritten Festigkeitsträgervariante in einer Fadenform vorliegt.

10. Artikel nach Anspruch 9, **dadurch gekennzeichnet, dass** die Fadenform ein Monofil, ein Filamentgarn, ein Stretchbrokengarn, ein Cordfaden oder ein Zwirnfaden (5) ist oder aus Stapelfasern, Kurzschnittfasern oder einer Pulpe gebildet ist.

11. Artikel nach Anspruch 10, **dadurch gekennzeichnet, dass** bei Vorliegen eines Garns oder Zwirns die Feinheit 1000 bis 12000 dtex beträgt.

12. Artikel nach einem der Ansprüche 1 bis 11, **dadurch gekennzeichnet, dass** der Festigkeitsträgerwerkstoff nach der ersten und/oder zweiten und/oder dritten Festigkeitsträgervariante als ein Flächengebilde vorliegt.

13. Artikel nach Anspruch 12, **dadurch gekennzeichnet, dass** das Flächengebilde ein Gewebe, Cordgewebe, ein Band, ein Gestrick, eine Gewirke, ein Gelege, ein Geflecht, ein Vlies oder ein Filz ist oder aus parallelisierten Fäden gebildet ist.

14. Artikel nach einem der Ansprüche 1 bis 13, **dadurch gekennzeichnet, dass** dieser ein Schlauch (1), ein Luftfederbalg, ein Kompensator, ein Antriebsriemen, ein Fördergurt oder eine mehrschichtige Stoffbahn ist.

15. Artikel nach Anspruch 14, **dadurch gekennzeichnet, dass** dieser ein Schlauch für druckmäßige und/oder dynamische und/oder thermische Belastung ist.

16. Artikel nach Anspruch 15, **dadurch gekennzeichnet, dass** dieser ein Ladeluftschlauch ist.

## Claims

1. Item made of a polymeric material which has embedded reinforcement, entirely or to some extent consisting of a textile material, **characterized in that**
- in the case of a first reinforcement variant, the textile material consists exclusively of polyoxadiazole (POD) and/or of a POD derivative and/or of a POD copolymer, or
- in the case of a second reinforcement variant, the textile material is a textile material combination consisting of POD and/or of a POD derivative and/or of a POD copolymer, and also of at least one further textile material which does not derive from the abovementioned POD group, or
- in the case of a third reinforcement variant, the textile material comprises a material combination consisting of POD and/or of a POD derivative and/or of a POD copolymer, and also of at least one further material which does not derive from a textile group.

2. Item according to Claim 1, **characterized in that** in the first reinforcement variant, the textile material consists exclusively of POD.

3. Item according to Claim 1, **characterized in that** in the second reinforcement variant the textile material is a textile material combination consisting of POD, and also of at least one further textile material which does not derive from the POD group.

4. Item according to Claim 1, **characterized in that** in the third reinforcement variant the textile material comprises a material combination consisting of POD, and also of at least one further material which does not derive from a textile group.

5. Item according to Claim 1 or 3, **characterized in that** in the second reinforcement variant the further textile material which does not derive from the POD group consists of polyamide (PA), polyester (PES), aramid, rayon, polyethylene terephthalate (PET), cotton, staple viscose, polyvinyl alcohol (PVAL), polyvinyl acetal (PVA), polyether ether ketone (PEEK), polyethylene 2,6-naphthalate (PEN), polyphenylene, polyphenylene oxide (PPO), polyphenylene sulfide (PPS), or polyphenylene ether, or of a combination of the abovementioned types of material.

6. Item according to Claim 1 or 4, **characterized in that** in the third reinforcement variant the further material which does not derive from the textile group consists of metal fibers, carbon fibers, glass fibers, or basalt fibers, or of a combination of the abovementioned types of material.

7. Item according to any of Claims 1 and 3 to 6, **characterized in that** in the second and/or third reinforcement variant the quantitative proportion of POD and/or of the POD derivative and/or of the POD copolymer is from 50 to 90% by weight.

8. Item according to any of Claims 1 to 7, **characterized in that** in the first and/or second and/or third reinforcement variant the reinforcement material has been prepared so as to promote adhesion.

9. Item according to any of Claims 1 to 8, **characterized in that** in the first and/or second and/or third reinforcement variant the reinforcement material is present in a filamental form.

10. Item according to Claim 9, **characterized in that** the filamental form is a monofil, a filament yarn, a stretch-broken yarn, a cord thread, or a twisted thread (5), or has been formed from staple fibers, from short chopped fibers, or from a pulp.

11. Item according to Claim 10, **characterized in that** when a twisted or other yarn is present the linear density is from 1000 to 12 000 dtex.

12. Item according to any of Claims 1 to 11, **characterized in that** in the first and/or second and/or third reinforcement variant the reinforcement material takes the form of a sheet-like structure.

13. Item according to Claim 12, **characterized in that** the sheet-like structure is a woven fabric, woven cord fabric, a ribbon, a knitted fabric, a laid scrim, a braided fabric, a nonwoven, or a felt, or has been formed from parallelized filaments.

14. Item according to any of Claims 1 to 13, **characterized in that** this is a hose (1), an air spring bellows, a compensator, a drive belt, a conveyor belt, or a multilayer web.

15. Item according to Claim 14, **characterized in that** this is a hose intended for pressure and/or dynamic and/or thermal stress.

16. Item according to Claim 15, **characterized in that** this is a charge-air hose.

## Revendications

1. Article en un matériau polymère, qui est muni d'un matériau de renfort incorporé, qui est constitué en totalité ou en partie d'un matériau textile, **caractérisé en ce que**
- selon une première variante du matériau de renfort, le matériau textile est constitué exclusivement de polyoxadiazole (POD) et/ou d'un dérivé de POD et/ou d'un copolymère de POD, ou
- selon une deuxième variante du matériau de renfort, le matériau textile est une combinaison de matériaux textiles, constituée de POD et/ou d'un dérivé de POD et/ou d'un copolymère de POD, ainsi que d'au moins un autre matériau textile, qui ne provient pas du groupe du POD susmentionné, ou
- selon une troisième variante du matériau de renfort, le matériau textile comprend une combinaison de matériaux, constituée de POD et/ou d'un dérivé de POD et/ou d'un copolymère de POD, ainsi que d'au moins un autre matériau, qui ne provient pas d'un groupe de textiles.

2. Article selon la revendication 1, **caractérisé en ce que**, selon la première variante du matériau de renfort, le matériau textile est exclusivement constitué de POD.

3. Article selon la revendication 1, **caractérisé en ce que**, selon la deuxième variante du matériau de renfort, le matériau textile est une combinaison de matériaux textiles, constituée de POD et d'au moins un autre matériau textile qui ne provient pas du groupe du POD.

4. Article selon la revendication 1, **caractérisé en ce que**, selon la troisième variante du matériau de renfort, le matériau textile comprend une combinaison de matériaux, constituée de POD et d'au moins un autre matériau qui ne provient pas d'un groupe de textiles.

5. Article selon la revendication 1 ou 3, **caractérisé en ce que**, selon la deuxième variante du matériau de renfort, l'autre matériau textile qui ne provient pas du groupe du POD est constitué de polyamide (PA), de polyester (PES), d'aramide, de rayonne, de polyéthylène téréphtalate (PET), de coton, de fibranne, d'alcool polyvinylique (PVAL), de polyvinylacétal (PVA), de polyétheréthercétone (PEEK), de 2,6-naphtalate de polyéthylène (PEN), de polyphénylène, de polyoxyde de phénylène (PPO), de polysulfure de phénylène (PPS) ou de polyéther de phénylène, ou d'une combinaison des types de matériaux susmentionnés.

6. Article selon la revendication 1 ou 4, **caractérisé en ce que**, selon la troisième variante du matériau de renfort, l'autre matériau qui ne provient pas d'un groupe de textiles est constitué de fibres métalliques, de fibres de carbone, de fibres de verre ou de fibres de basalte ou d'une combinaison des types de matériaux susmentionnés.

7. Article selon l'une quelconque des revendications 1 et 3 à 6, **caractérisé en ce que**, selon la deuxième et/ou la troisième variante du matériau de renfort, la proportion de POD et/ou du dérivé de POD et/ou du copolymère de POD est de 50 à 90 % en poids.

8. Article selon l'une quelconque des revendications 1 à 7, **caractérisé en ce que** le matériau de renfort selon la première et/ou la deuxième et/ou la troisième variante du matériau de renfort est préparé d'une manière adaptée à l'adhésion.

9. Article selon l'une quelconque des revendications 1 à 8, **caractérisé en ce que** le matériau de renfort selon la première et/ou la deuxième et/ou la troisième variante du matériau de renfort se présente sous la forme d'un fil.

10. Article selon la revendication 9, **caractérisé en ce que** le fil est un monofil, un fil continu, un fil craqué, un câblé ou un fil retors (5), ou est formé de fibres discontinues, de fibres découpées courtes ou d'une pâte.

11. Article selon la revendication 10, **caractérisé en ce que**, lors de la présence d'un fil ou d'un fil retors, la finesse est de 1 000 à 12 000 dtex.

12. Article selon l'une quelconque des revendications 1 à 11, **caractérisé en ce que** le matériau de renfort selon la première et/ou la deuxième et/ou la troisième variante du matériau de renfort se présente sous la forme d'une structure plate.

13. Article selon la revendication 12, **caractérisé en ce que** la structure plate est un tissu, une toile en câblé, une bande, un tricot, un mat, un tressage, un non-tissé ou un feutre, ou est formée de fils parallélisés.

14. Article selon l'une quelconque des revendications 1 à 13, **caractérisé en ce que** celui-ci est un tuyau flexible (1), un soufflet à air, un compensateur, une courroie d'entraînement, une bande transporteuse ou un panneau multicouche.

15. Article selon la revendication 14, **caractérisé en ce que** celui-ci est un tuyau flexible pour chargement de pression et/ou dynamique et/ou thermique.

16. Article selon la revendication 15, **caractérisé en ce que** celui-ci est un tuyau flexible d'air d'alimentation.
